# EUROPÄISCHE PATENTSCHRIFT

(11) **EP 0 392 302 B1**
(45) Veröffentlichungstag und Bekanntmachung des Hinweises auf die Patenterteilung: **21.06.1995**
(21) Anmeldenummer: 90106242.2
(22) Anmeldetag: 31.03.1990
(51) Int. Cl.: H02H 7/085

(54) **Motorüberwachungsschalter**
Motor monitoring switch
Interrupteur de surveillance de moteur

(30) Priorität: 12.04.1989 DE 8904581 U
(43) Veröffentlichungstag der Anmeldung: 17.10.1990
(73) Patentinhaber: EUBA Antriebstechnik Eller GmbH, D-45279 Essen (DE)
(72) Erfinder: Eller, Dieter, D-4300 Essen 14 (DE)
(74) Vertreter: Gesthuysen, Hans Dieter, Dipl.-Ing.

(56) Entgegenhaltungen:
- DE-B- 2 449 009
- FR-A- 2 379 929
- GB-A- 1 604 266

## Beschreibung

Die Erfindung betrifft einen Motorüberwachungsschalter für einen in der Drehrichtung umkehrbaren Elektromotor, mit einer in den Zuleitungen des Elektromotors vorgesehenen Drehrichtungs-Umkehrschaltung und einer zwischen der Drehrichtungs-Umkehrschaltung und dem Elektromotor in den Zuleitungen des Elektromotors vorgesehenen Überwachungsschaltung, wobei die Drehrichtungs-Umkehrschaltung mehrere Umkehrschaltkontakte aufweist, wobei die Überwachungsschaltung mindestens einen in der Zuleitung des Elektromotors vorgesehenen Stromwandler, eine Stromistwertüberwachungsschaltung, einen Überlastschutzschalter und eine Spannungsversorgungsschaltung aufweist und wobei die Stromistwertüberwachungsschaltung eingangsseitig an eine Sekundärwicklung des Stromwandlers und ausgangsseitig an den Überlastschutzschalter angeschlossen ist und aus einer Istwertanalysestufe und einer der Istwertanalysestufe nachgeschalteten, also ausgangsseitig vorgesehenen Ansteuerstufe besteht und die Ansprechschwelle der Stromistwertüberwachungsschaltung einstellbar ist, wobei zur Einstellung der Ansprechschwelle ein einstellbares Bauelement, insbesondere ein einstellbarer Widerstand, vorgesehen sein kann.

Der bekannte Motorüberwachungsschalter, von dem die Erfindung ausgeht (vgl. die DE - A - 27 04 820), kann durch seine besondere Konstruktion für Elektromotoren mit ganz unterschiedlichen Nennströmen, über einen weiten Bereich möglicher Nennströme, verwendet werden. Dieser Motorüberwachungsschalter ist in verschiedener Hinsicht besonders zweckmäßig aufgebaut. Beispielsweise ist, zur Berücksichtigung eines zumeist weit über dem Nennstrom liegenden Anlaufstroms, eine entsprechende Verzögerungsschaltung vorgesehen, wird der Überlastschutzschalter von der Spannungsversorgungsschaltung her mit einer bestimmten Spannung versorgt und ist die Stromistwertüberwachungsschaltung mit einer besonders gestalteten Istwertanalysestufe und einer besonders gestalteten Ansteuerstufe ausgestattet.

Der bekannte Motorüberwachungsschalter kann für Elektromotoren mit einer bestimmten Drehrichtung ebensogut eingesetzt werden wie für Elektromotoren mit einer umkehrbaren Drehrichtung. Im letztgenannten Falle gehört zu einem solchen Motorüberwachungsschalter natürlich eine übliche Drehrichtungs-Umkehrschaltung; ein solcher Motorüberwachungsschalter umfaßt dann also sowohl eine in den Zuleitungen des Elektromotors vorgesehene Drehrichtungs-Umkehrschaltung als auch eine zwischen der Drehrichtungs-Umkehrschaltung und dem Elektromotor in den Zuleitungen des Elektromotors vorgesehene Überwachungsschaltung. Durch die Überwachungsschaltung werden beispielsweise bei einem Drehstrommotor zwei der drei Phasen überwacht, wobei eine Umkehr der Drehrichtung des Elektromotors durch einen Wechsel der beiden Phasen erfolgt, was für die Überwachungsschaltung ohne Bedeutung ist. Das ist bei symmetrisch arbeitenden Elektromotoren, also Elektromotoren, für die die Überwachungsschaltung des Motorüberwachungsschalters für beide Drehrichtungen ein und dieselbe Ansprechschwelle haben soll, unproblematisch. Problematisch ist das aber dann, wenn für die Drehrichtungen des Elektromotors unterschiedliche Ansprechschwellen realisiert werden sollen. Ansprechschwelle ist dabei im weitesten Sinne zu verstehen, meint also nicht nur den Absolutwert eines eventuell überwachten Stroms, sondern beispielsweise auch die Dauer einer Sollwertüberschreitung, eine Kombination beider Kriterien oder weitere relevante Kriterien.

Der Erfindung liegt folglich die Aufgabe zugrunde, den bekannten Motorüberwachungsschalter so auszugestalten und weiterzubilden, daß für die beiden Drehrichtungen des Elektromotors unterschiedliche Ansprechschwellen einstellbar sind.

Die zuvor aufgezeigte Aufgabe ist dadurch gelöst, daß die Überwachungsschaltung zwei Stromistwertüberwachungsschaltungen aufweist, daß den Stromistwertüberwachungsschaltungen Umschaltkontakte eingangsseitig vorgeschaltet und ausgangsseitig nachgeschaltet sind und über die Umschaltkontakte jeweils eine Stromistwertüberwachungsschaltung eingeschaltet und die andere Stromistwertüberwachungs schaltung ausgeschaltet ist und daß die Umschaltkontakte von den Umkehrschaltkontakten bzw. entsprechend der Ansteuerung der Umkehrschaltkontakte gesteuert sind. Erfindungsgemäß ist also für jede Drehrichtung des Elektromotors eine eigene Stromistwertüberwachungsschaltung vorgesehen, wobei jeweils nur die der jeweiligen Drehrichtung zugeordnete Stromistwertüberwachungsschaltung durch die Umschaltkontakte aktiviert ist. Dadurch kann für jede Drehrichtung eine unterschiedliche Ansprechschwelle vorgegeben werden, Ansprechschwelle auch hier im weitesten Sinne zu verstehen.

Man kann für die beiden Drehrichtungen ganz unterschiedliche Ansprechkriterien realisieren, wenn man schaltungstechnisch unterschiedliche Stromistwertüberwachungsschaltungen verwendet. Meist werden aber die Ansprechkriterien, die letztlich die Ansprechschwelle im Sinne der Lehre der Erfindung bestimmen, nicht so unterschiedlich sein bzw. nur ein Ansprechkriterium wird unterschiedlich sein. Dann lassen sich auch schaltungstechnisch weitgehend übereinstimmende Stromistwertüberwachungsschaltungen verwenden.

Ist, wie zuvor erläutert und aus dem Stand der Technik bekannt, zur Einstellung der Ansprechschwelle der Stromistwertüberwachungsschaltung nur ein einstellbares Bauelement, insbesondere ein einstellbarer Widerstand vorgesehen, so läßt sich die Lehre der Erfindung dadurch verwirklichen, daß die Stromistwertüberwachungsschaltung parallel zueinander geschaltet zwei einstellbare Bauelemente aufweist, daß die beiden einstellbaren Bauelemente mit je einem gemeinsamen Umschaltkontakt davor und dahinter in Reihe geschaltet sind und aber die Umschaltkontakte jeweils ein stellbares Bauelement eingeschaltet und das andere einstellbare Bauelement ausgeschaltet ist und daß die Umschaltkontakte von den Umkehrschaltkontakten bzw. entsprechend der Ansteuerung der Umkehrschaltkontakte gesteuert sind. Auf diese Weise hat man also mit minimalem Aufwand eine für beide Drehrichtungen unterschiedlich einstellbare Ansprechschwelle realisiert, nämlich lediglich durch Verwirklichung der Umschaltkontakte und die Verwendung von zwei parallelgeschalteten einstellbaren Bauelementen, insbesondere einstellbaren Widerständen.

Im übrigen ist ein Motorüberwachungsschalter bekannt (vgl. die GB - A - 1 604 266), bei dem für die beiden Drehrichtungen des Elektromotors unterschiedliche Ansprechschwellen einstellbar sind. Dieser bekannte Motorüberwachungsschalter weist eine Stromistwertüberwachungs schaltung mit zwei einstellbaren Bauelementen auf; es handelt sich dabei um zwei Widerstände. Dabei ist den beiden einstellbaren Bauelementen, also den beiden Widerständen, die als Potentiometer ausgeführt sind, nur ein gemeinsamer Umschaltkontakt zugeordnet, nämlich ein Relaiskontakt; der Relaiskontakt ist, je nach Betrachtungsweise, entweder den beiden Widerständen vorgeschaltet oder nachgeschaltet.

Im folgenden wird die Erfindung anhand einer lediglich Ausführungsbeispiele darstellenden Zeichnung näher erläutert. In diesem Zusammenhang werden auch weiter bevorzugte Ausgestaltungen und Weiterbildungen der Lehre der Erfindung in beiden Alternativen mit erläutert. In der Zeichnung zeigt
- Fig. 1: in einer schematischen Darstellung die Beschaltung eines in der Drehrichtung umkehrbaren Elektromotors mit einem erfindungsgemäßen Motorüberwachungsschalter,
- Fig. 2: die schaltungstechnischen Details für eine zu überwachende Zuleitung,
- Fig. 3: in einem detaillierten Schaltbild ein erstes Ausführungsbeispiel der Überwachungsschaltung eines erfindungsgemäßen Motorüberwachungsschalters und
- Fig. 4: ausschnittweise, eine Stromistwertüberwachungsschaltung für ein zweites Ausführungsbeispiel eines erfindungsgemäßen Motorüberwachungsschalters.

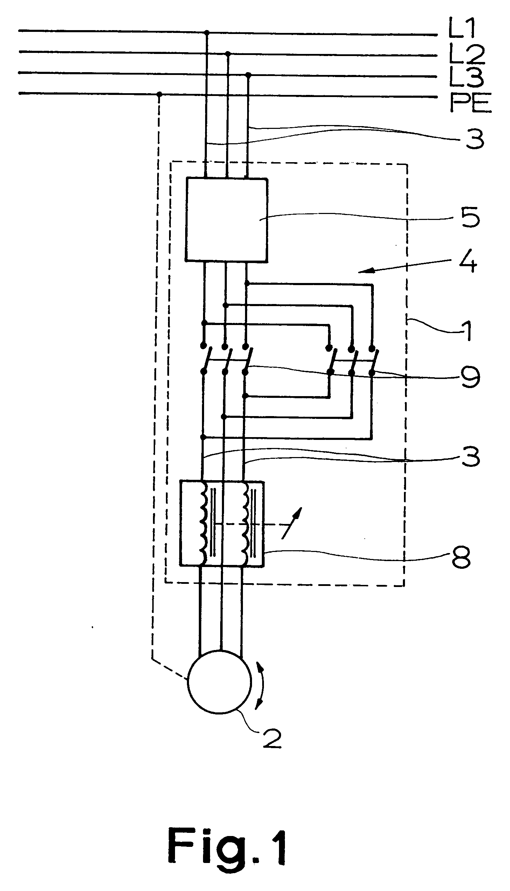

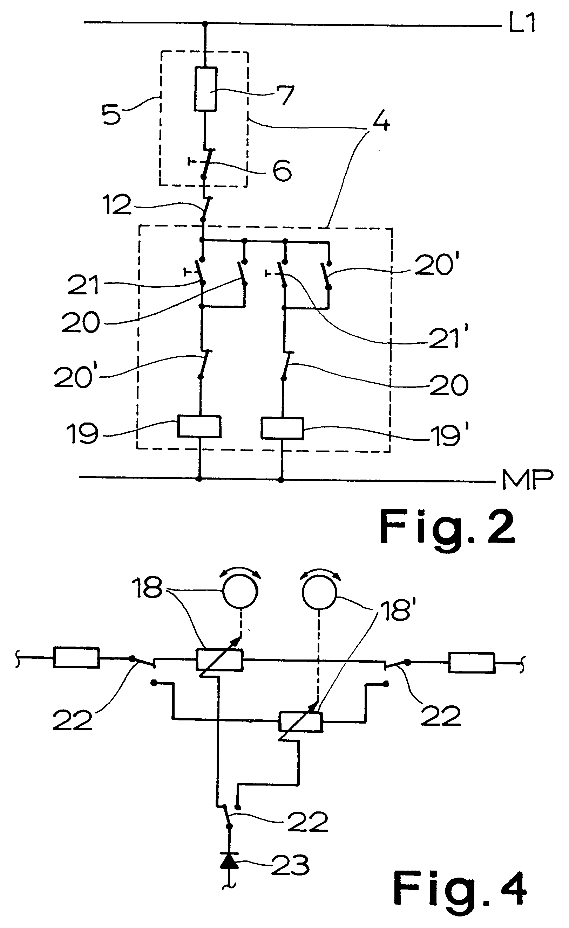

Fig. 1 zeigt als besonders bevorzugtes Anwendungsbeispiel für einen erfindungsgemäßen Motorüberwachungsschalter 1 einen als Drehstrommotor ausgeführten Elektromotor 2, dessen drei Phasenanschlüsse L1, L2, L3 und dessen Schutzleiteranschluß PE eingezeichnet sind. Nicht dargestellt ist ein ebenfalls vorhandener Mittelpunktanschluß Mp, der aber dann in Fig. 2 zu erkennen ist.

Bei dem Elektromotor 2 handelt es sich um einen in der Drehrichtung umkehrbaren Elektromotor, so daß der Motorüberwachungsschalter 1 im dargestellten Ausführungsbeispiel eine in die Zuleitungen 3 eingeschaltete Drehrichtungs-Umkehrschaltung 4 aufweist. Zu der Drehrichtungs-Umkehrschaltung 4 gehört auch ein Hauptschalter 5, der, wie bekannt, einen Hauptkontakt 6 (Fig. 2) in Reihe mit einer Sicherung 7 (Fig. 2) umfaßt.

Zwischen der Drehrichtungs-Umkehrschaltung 4 und dem Elektromotor 2 ist in die zu überwachenden Zuleitungen 3 des Elektromotors 2 eine Überwachungsschaltung 8 eingeschaltet. Die Drehrichtungs-Umkehrschaltung 4 weist mehrere, im dargestellten Ausführungsbeispiel sechs Umschaltkontakte 9 auf. Die Überwachungsschaltung 8 weist mindestens einen Stromwandler 10, im dargestellten Ausführungsbeispiel zwei Stromwandler 10, eine Stromistwertüberwachungsschaltung 11, einen Überlastschutzschalter 12, der in mindestens eine der Zuleitungen 3, vorzugsweise in alle Zuleitungen 3 mittels Kontakten eingeschaltet ist, und eine Spannungsversor gungsschaltung 13 auf. Der Stromwandler 10 weist eine Primärwicklung 14 und eine Sekundärwicklung 15 auf, wobei die Stromistwertüberwachungsschaltung 11 eingangsseitig an die Sekundärwicklung 15 des Stromwandlers 10 angeschlossen ist.

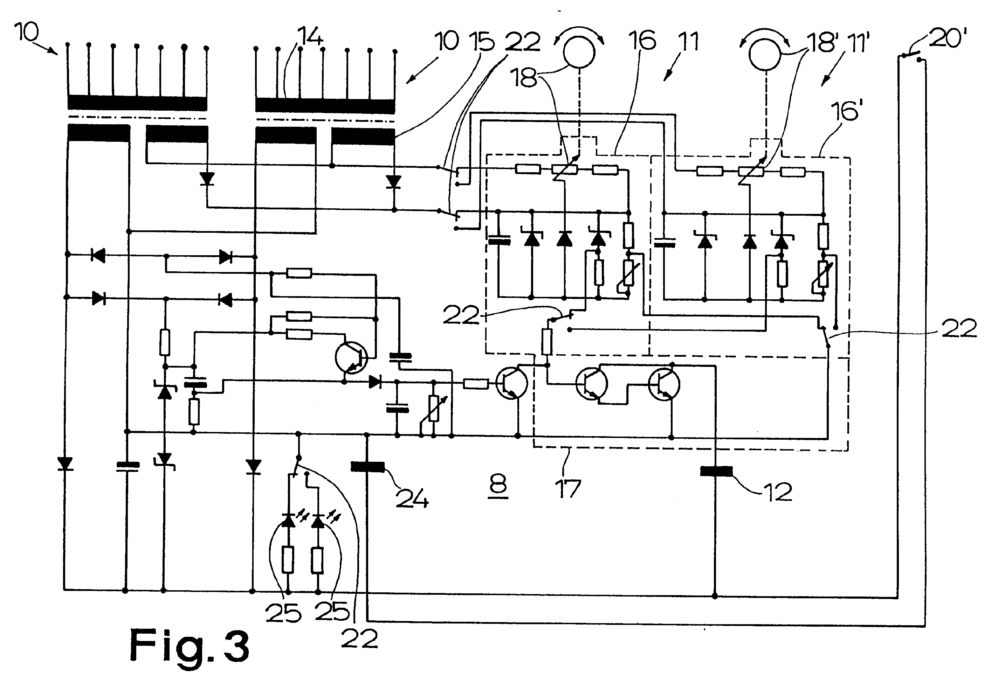

Im dargestellten Ausführungsbeispiel, Fig. 3, gilt im übrigen, daß für zwei zu überwachende Zuleitungen 13 zwei Stromwandler 10 vorgesehen sind, die zueinander parallelgeschaltet auf ein und dieselbe Stromistwertüberwachungsschaltung 11 arbeiten. in Fig. 2 ist im übrigen der Kontakt des Überlastschutzschalters 12 mit dem entsprechenden Bezugszeichen versehen, während in Fig. 3 die Erregerwicklung des hier als Relais bzw. Schütz ausgeführten Überlastschutzschalters 12 mit dem entsprechenden Bezugszeichen identifiziert ist.

Für die Stromistwertüberwachungsschaltung 11 gilt weiter, daß diese ausgangsseitig an den Überlastschutzschalter 12 angeschlossen ist und selbst wiederum aus einer Istwertanalysestufe 16 und einer dieser nachgeschalteten, also ausgangsseitig angeordneten Ansteuerstufe 17 besteht. Durch das dargestellte einstellbare Bauelement 18 in Form eines Potentiometers ist angedeutet, daß die Ansprechschwelle, hier der Ansprechstrom, in der Stromistwertüberwachungsschaltung 11 einstellbar ist.

Der grundsätzliche Aufbau des bisher erläuterten Motorüberwachungsschalters 1 bzw. der Überwachungsschaltung 8 dieses Motorüberwachungsschalters 1 ist einerseits weiter oben schon ausführlich erläutert worden, ist andererseits aus der DE A - 27 04 820 bekannt, so daß insoweit nochmals auf den Offenbarungsgehalt der DE - A - 27 04 820 verwiesen und dieser auch zum Offenbarungsgehalt der vorliegenden Anmeldung gemacht werden darf. Ergänzend in Verbindung mit Fig. 2 zur Funktionsweise der Drehrichtungs-Umkehrschaltung 4 noch folgendes:

In Reihe geschaltet zum Hauptschalter 5 und zum Überlastschutzschalter 12 finden sich zwischen einem Phasenanschluß L1 und dem Mittelpunktanschluß Mp Erregerwicklungen 19, 19′ und zugeordnete Schaltkontakte 20, 20′ bzw. Handschaltkontakte 21, 21′. Durch diese Schaltung wird erreicht, daß immer nur genau eine Erregerwicklung 19 bzw. 19′ stromdurchflossen sein kann, und das auch nur, nachdem zuvor der Hauptkontakt 6 von Hand geöffnet und wieder geschlossen worden ist. Die Erregerwicklung 19, die Schaltkontakte 20 und der Handschaltkontakt 21 korrespondieren dabei zu den in Fig. 1 in den durchgehenden Zuleitungen 3 angeordneten Umkehrschaltkontakten 9, während die Erregerwicklung 19′, die Schaltkontakte 20′ und der Handschaltkontakt 21′ zu den in Fig. 1 rechts versetzt dargestellten Umkehrschaltkontakten 9 korrespondieren, also entsprechend gleichzeitig mit diesen ihren Schaltzustand ändern.

Erfindungsgemäß ist für den dargestellten Motorüberwachungsschalter 1 nun wesentlich, daß die Überwachungsschaltung 8 zwei, vorzugsweise miteinander schaltungstechnisch übereinstimmende Stromistwertüberwachungsschaltungen 11, 11′ aufweist, daß den Stromistwertüberwachungsschaltungen 11, 11′ Umschaltkontakte 22 eingangsseitig vorgeschaltet und ausgangsseitig nachgeschaltet sind und über die Umschaltkontakte 22 jeweils eine Stromistwertüberwachungsschaltung 11 bzw. 11′ eingeschaltet und die andere Stromistwertüberwachungsschaltung 11′ bzw. 11 ausgeschaltet ist und daß die Umschaltkontakte 22 von den Umkehrschaltkontakten 9 bzw. entsprechend der Ansteuerung der Umschaltkontakte 9 gesteuert sind. Durch die zuvor erläuterten Schaltungsmaßnahmen gelingt es, jeweils nur eine der entsprechenden Drehrichtung des Elektromotors 2 zugeordnete Stromistwertüberwachungsschaltung 11 bzw. 11′ zu aktivieren, was die im allgemeinen Teil der Beschreibung erläuterten Vorteile hat.

Im dargestellten Ausführungsbeispiel gemäß Fig. 3 gilt im übrigen noch weiter, daß die Umschaltung der Stromistwertüberwachungsschaltungen 11, 11′ hier nur die jeweilige Istwertanalysestufe 16 bzw. 16′ betrifft, daß nämlich beide Stromistwertüberwachungsschaltungen 11, 11′ eine gemeinsame Ansteuerstufe 17 aufweisen. Dies trägt der Tatsache Rechnung, daß alle denkbaren Unterschiede in der Ansprechschwelle, also alle denkbar unterschiedlichen Ansprechkriterien, in der Istwertanalysestufe 17 in jedem Fall nur der Ansteuerung des Überlastschutzschalters 12 mit dem richtigen Ansteuerstrom und der richtigen Ansteuerspannung dient. Folglich kann die Ansteuerstufe 17 für beide Stromistwertüberwachungschaltungen 11, 11′ gemeinsam verwendet werden. Entsprechend gilt im hier dargestellten Ausführungsbeispiel dann auch, daß die ausgangsseitigen Umschaltkontakte 22 zwischen den Istwertanalysestufen 16, 16′ und der gemeinsamen Ansteuerstufe 17 angeordnet sind.

Fig. 4 zeigt, ausschnittweise, nämlich nur im Bereich der Reihenschaltung der drei dem einstellbaren Bauelement 18 bzw. 18′ zugeordneten bzw. dieses umfassenden Widerstände, eine Überwachungsschaltung 8 eines abgewandelten, schaltungstechnisch erheblich vereinfachten Ausführungsbeispiels. Für dieses Ausführungsbeispiel ist wesentlich, daß zur Einstellung der Ansprechschwelle der Stromistwertüberwachungsschaltung 11 nur ein einstellbares Bauelement 18, nämlich hier und vorzugsweise ein einstellbarer Widerstand, beispielsweise aber auch ein einstellbarer Kondensator od. dgl., vorgesehen ist. Wesentlich ist nun, daß hier nach dieser Lehre der Erfindung trotz der wunschgemäßen Einstellbarkeit unterschiedlicher Ansprechschwellen für die beiden Drehrichtungen des Elektromotors 2 im Grundsatz nur eine einzige Stromistwertüberwachungsschaltung 11 vorgesehen ist, daß diese Stromistwertüberwachungsschaltung 11 aber parallel zueinander geschaltet zwei einstellbare Bauelemente 18, 18′ aufweist, daß die einstellbaren Bauelemente 18, 18′ mit je einem gemeinsamen Umschaltkontakt 22 davor und dahinter in Reihe geschaltet sind und über die Umschaltkontakte 22 jeweils ein einstellbares Bauelement 18 bzw. 18′ eingeschaltet und das andere einstellbare Bauelement 18′ bzw. 18 ausgeschaltet ist und daß die Umschaltkontakte 22 von den Umkehrschaltkontakten 9 bzw. entsprechend der Ansteuerung der Umkehrschaltkontakte 9 gesteuert sind. im dargestellten Ausführungsbeispiel gilt wegen der besonderen Schaltung der einstellbaren Bauelemente 18, 18′ in Verbindung mit einer Diode 23, über die der Brückeneingang der im übrigen vorgesehenen Brückenschaltung an die Widerstands-Reihenschaltung angeschlossen ist, daß insgesamt drei Umschaltkontakte 22 zur Umschaltung entsprechend der unterschiedlichen Drehrichtung des Elektromotors 2 vorgesehen sind. Mit einfachsten schaltungstechnischen Maßnahmen läßt sich also die jeweils gewünschte Ansprechschwelle verwirklichen.

Es gibt nun verschiedene Möglichkeiten, die gewünschte Ansteuerung der Umschaltkontakte 22 von den Umkehrschaltkontakten 9 her zu realisieren. Die hier verwirklichte Schaltungsanordnung arbeitet mit einem Umschaltrelais, dessen Hilfskontakte die Umschaltkontakte 22 sind und dessen Erregerwicklung 24 entsprechend der Umschaltung der Umkehrschaltkontakte 9 bzw. von den Umkehrschaltkontakten 9 angesteuert ist. Grundsätzlich gibt es natürlich andere Realisierungsformen, beispielsweise über Thyristorschaltungen.

Im dargestellten Ausführungsbeispiel gilt nun, daß die Erregerwicklung 24 des Umschaltrelais in Reihe mit einem Umkehrschaltkontakt 9 bzw. mit einem entsprechend geschalteten Schaltkontakt 20′ zwischen dem positiven und dem negativen Pol der Spannungsversorgungsschaltung 13 der Überwachungsschaltung 8 liegt. Hier gilt die Zuordnung zur Erregerwicklung 19′; ist diese Erregerwicklung 19′ stromdurchflossen, so schließt der Schaltkontakt 20′, der in Fig. 3 rechts oben dargestellt ist, und die Erregerwicklung 24 des Umschaltrelais wird vom Strom durchflossen, so daß die Umschaltkontakte 22 in Fig. 3 aus der dargestellten Schaltstellung heraus in die andere Schaltstellung umgeschaltet werden.

Die in Fig. 3 dargestellte Ausführungsform des erfindungsgemäßen Motorüberwachungsschalters 1 zeichnet sich weiter dadurch aus, daß als Anzeigeelemente 25 Leuchtdioden vorgesehen sind. Im dargestellten Ausführungsbeispiel handelt es sich bei den beiden Anzeigeelementen 25 um Leuchtdioden, die des Betriebs mit einer passenden Steuerspannung bedürfen, so daß die Anbindung an die Spannungsversorgungsschaltung 13 besonders zweckmäßig ist. Es leuchtet jeweils das Anzeigeelement 25 auf, das der entsprechenden Drehrichtung des Elektromotors 2 entspricht, im dargestellten und bevorzugten Ausführungsbeispiel aber auch nur dann, wenn der Elektromotor 2 tatsächlich eingeschaltet ist. Im übrigen gilt, daß derartige Anzeigeelemente 25 natürlich auch beim Ausführungsbeispiel gemäß Fig. 4 verwendet werden können.

## Patentansprüche

1. Motorüberwachungsschalter (1) für einen in der Drehrichtung umkehrbaren Elektromotor (2), mit einer in den Zuleitungen (3) des Elektromotors (2) vorgesehenen Drehrichtungs-Umkehrschaltung (4) und einer zwischen der Drehrichtungs-Umkehrschaltung (4) und dem Elektromotor (2) in den Zuleitungen (3) des Elektromotors (2) vorgesehenen Überwachungsschaltung (8), wobei die Drehrichtungs-Umkehrschaltung (4) mehrere Umkehrschaltkontakte (9) aufweist, wobei die Überwachungsschaltung (8) mindestens einen in der Zuleitung (3) des Elektromotors (2) vorgesehenen Stromwandler (10), eine Stromistwertüberwachungsschaltung (11), einen Überlastschutzschalter (12) und eine Spannungsversorgungsschaltung (13) aufweist und wobei die Stromistwertüberwachungsschaltung (11) eingangsseitig an eine Sekundärwicklung (15) des Stromwandlers (10) und ausgangsseitig an den Überlastschutzschalter (12) angeschlossen ist und aus einer Istwertanalysestufe (16) und einer der Istwertanalysestufe (16) nachgeschalteten, also ausgangsseitig vorgesehenen Ansteuerstufe (17) besteht und die Ansprechschwelle der Stromistwertüberwachungsschaltung (11) einstellbar ist, **dadurch gekennzeichnet**, daß die Überwachungsschaltung (8) zwei Stromistwertüberwachungsschaltungen (11, 11′) aufweist, daß den Stromistwertüberwachungsschaltungen (11, 11′) Umschaltkontakte (22) eingangsseitig vorgeschaltet und ausgangsseitig nachgeschaltet sind und über die Umschaltkontakte (22) jeweils eine Stromistwertüberwachungsschaltung (11 bzw. 11′) eingeschaltet und die andere Stromistwertüberwachungsschaltung (11′ bzw. 11) ausgeschaltet ist und daß die Umschaltkontakte (22) von den Umkehrschaltkontakten (9) bzw. entsprechend der Ansteuerung der Umkehrschaltkontakte (9) gesteuert sind.

2. Motorüberwachungsschalter nach Anspruch 1, dadurch gekennzeichnet, daß die beiden Stromistwertüberwachungsschaltungen (11, 11′) schaltungstechnisch übereinstimmen.

3. Motorüberwachungsschalter nach Anspruch 1 oder 2, dadurch gekennzeichnet, daß die beiden Stromistwertüberwachungsschaltungen (11, 11′) eine gemeinsame Ansteuerstufe (17) aufweisen.

4. Motorüberwachungsschalter nach Anspruch 3, dadurch gekennzeichnet, daß die ausgangsseitigen Umschaltkontakte (22) zwischen den Istwertanalysestufen (16, 16′) und der gemeinsamen Ansteuerstufe (17) vorgesehen sind.

5. Motorüberwachungsschalter für einen in der Drehrichtung umkehrbaren Elektromotor (2), mit einer in den Zuleitungen (3) des Elektromotors (2) vorgesehenen Drehrichtungs-Umkehrschaltung (4) und einer zwischen der Drehrichtungs-Umkehrschaltung (4) und dem Elektromotor (2) in den Zuleitungen (3) des Elektromotors (2) vorgesehenen Überwachungsschaltung (8), wobei die Drehrichtungs-Umkehrschaltung (4) mehrere Umkehrschaltkontakte (9) aufweist, wobei die Überwachungsschaltung (8) mindestens einen in der Zuleitung (3) des Elektromotors (2) vorgesehenen Stromwandler (10), eine Stromistwertüberwachungsschaltung (11), einen Überlastschutzschalter (12) und eine Spannungsversorgungsschaltung (13) aufweist und wobei die Stromistwertüberwachungsschaltung (11) eingangsseitig an eine Sekundärwicklung (15) des Stromwandlers (10) und ausgangsseitig an den Überlastschutzschalter (12) angeschlossen ist und aus einer Istwertanalysestufe (16) und einer der Istwertanalysestufe (16) nachgeschalteten, also ausgangsseitig vorgesehenen Ansteuerstufe (17) besteht und die Ansprechschwelle der Stromistwertüberwachungsschaltung (11) einstellbar ist, wobei zur Einstellung der Ansprechschwelle ein einstellbares Bauelement (18), insbesondere ein einstellbarer Widerstand, vorgesehen ist, **dadurch gekennzeichnet**, daß die Stromistwertüberwachungsschaltung (11) parallel zueinander geschaltet zwei einstellbare Bauelemente (18, 18′) aufweist, daß die beiden einstellbaren Bauelemente (18, 18′) mit je einem gemeinsamen Umschaltkontakt (22) davor und dahinter in Reihe geschaltet sind und über die Umschaltkontakte (22) jeweils ein einstellbares Bauelement (18 bzw. 18′) eingeschaltet und das andere einstellbare Bauelement (18′ bzw. 18) ausgeschaltet ist und daß die Umschaltkontakte (22) von den Umkehrschaltkontakten (9) bzw. entsprechend der Ansteuerung der Umkehrschaltkontakte (9) gesteuert sind.

6. Motorüberwachungsschalter nach einem der Ansprüche 1 bis 5, dadurch gekennzeichnet, daß die Umschaltkontakte (22) Hilfskontakte eines entsprechend angeordneten Umschaltrelais mit einer entsprechend der Ansteuerung der Umkehrschaltkontakte (9) bzw. von den Umkehrschaltkontakten (9) angesteuerter Erregerwicklung (24) sind.

7. Motorüberwachungsschalter nach Anspruch 6, dadurch gekennzeichnet, daß die Erregerwicklung (24) des Umschaltrelais in Reihe mit einem Umkehrschaltkontakt (9) bzw. einem entsprechend den Umkehrschaltkontakten (9) geschalteten Schaltkontakt (20′) zwischen dem positiven und dem negativen Pol einer Spannungsquelle, insbesondere zwischen dem positiven und dem negativen Pol der Spannungsversorgungsschaltung (13) liegt.

8. Motorüberwachungsschalter nach einem der Ansprüche 1 bis 7, dadurch gekennzeichnet, daß die Überwachungsschaltung (8) zwei, vorzugsweise zwischen dem positiven und dem negativen Pol der Spannungsversorgungsschaltung (13) geschaltete, Anzeigeelemente (25) aufweist und die Anzeigeelemente (25) zueinander parallel und mit einem gemeinsamen Umschaltkontakt (22) in Reihe geschaltet sind.

9. Motorüberwachungsschalter nach Anspruch 8, dadurch gekennzeichnet, daß die Anzeigeelemente (25) als Leuchtdioden ausgeführt sind.

## Claims

1. A motor monitoring switch (1) for an electric motor (2) having a reversible direction of rotation, with a direction of rotation reversing circuit (4) provided in the supply leads (3) of the electric motor (2) and a monitoring circuit (8) provided in the supply leads (3) of the electric motor (2) between the direction of rotation reversing circuit (4) and the electric motor (2), wherein the direction of rotation reversing circuit (4) comprises a plurality of reversing switching contacts (9), wherein the monitoring circuit (8) comprises at least one current transformer (10) which is provided in the supply lead (3) of the electric motor (2), a current actual value monitoring circuit (11), an overload protection switch (12) and a voltage supply switch (13), and wherein the current actual value monitoring circuit (11) is connected on its input side to a secondary winding (15) of the current transformer (10) and on its output side to the overload protection switch (12) and consists of an actual value analysis stage (16) and of a triggering stage (17) which is connected downstream of the actual value analysis stage (16) and which is therefore provided on the output side, and the response threshold of the current actual value monitoring circuit (11) is adjustable, characterised in that the monitoring circuit (8) comprises two current actual value monitoring circuits (11, 11′), that change-over contacts (22) are connected upstream of the current monitoring circuits (11, 11′) on the input side and downstream thereof on the output side, and one current actual value monitoring circuit (11; 11′) is connected each time via the change-over contacts (22) and the other current actual value monitoring circuit (11′ 11) is disconnected, and that the change-over contacts (22) are controlled by the reversing switching contacts (9) or in accordance with the triggering of the reversing switching contacts (9).

2. A motor monitoring switch according to claim 1, characterised in that the two current actual value monitoring circuits (11, 11′) are of matching circuit design.

3. A motor monitoring switch according to claim 1 or 2, characterised in that the two current actual value monitoring circuits (11, 11′) have a common triggering stage (17).

4. A motor monitoring switch according to claim 3, characterised in that the change-over contacts (22) on the output side are provided between the actual value analysis stages (16, 16′) and the common triggering stage (17).

5. A motor monitoring switch for an electric motor (2) having a reversible direction of rotation, with a direction of rotation reversing circuit (4) provided in the supply leads (3) of the electric motor (2) and a monitoring circuit (8) provided in the supply leads (3) of the electric motor (2) between the direction of rotation reversing circuit (4) and the electric motor (2), wherein the direction of rotation reversing circuit (4) comprises a plurality of reversing switching contacts (9), wherein the monitoring circuit (8) comprises at least one current transformer (10) which is provided in the supply lead (3) of the electric motor (2), a current actual value monitoring circuit (11), an overload protection switch (12) and a voltage supply switch (13), and wherein the current actual value monitoring circuit (11) is connected on its input side to a secondary winding (15) of the current transformer (10) and on its output side to the overload protection switch (12) and consists of an actual value analysis stage (16) and of a triggering stage (17) which is connected downstream of the actual value analysis stage (16) and which is therefore provided on the output side, and the response threshold of the current actual value monitoring circuit (11) is adjustable, wherein an adjustable component (18), particularly a variable resistor, is provided for adjusting the response threshold, characterised in that the current actual value monitoring circuit (11) comprises two adjustable components (18, 18′) connected in parallel to each other, that the two adjustable components (18, 18′) are each connected in series to a common change-over contact (22) upstream and downstream of them, and one adjustable component (18; 18′) is connected and the other adjustable component (18′ 18) is disconnected each time via the change-over contacts (22), and that the change-over contacts (22) are controlled by the reversing switching contacts (9) or in accordance with the triggering of the reversing switching contacts (9).

6. A motor monitoring switch according to any one of claims 1 to 5, characterised in that the change-over contacts (22) are auxiliary contacts of a correspondingly disposed change-over relay having an energising winding (24) triggered in accordance with the triggering of the reversing switching contacts (9) or by the reversing switching contacts (9).

7. A motor monitoring switch according to claim 6, characterised in that the energising winding (24) of the change-over relay is in series with a reversing switching contact (9) or with a switching contact (20′) which is switched in accordance with the reversing switching contacts (9) between the positive and negative terminal of a voltage source, particularly between the positive and negative terminal of the voltage supply circuit (13).

8. A motor monitoring switch according to any one of claims 1 to 7, characterised in that the monitoring circuit (8) comprises two indicator elements (25), preferably connected between the positive and the negative terminals of the voltage supply circuit (13), and the indicator elements (25) are connected in parallel with each other and in series with a common change-over contact (22).

9. A motor monitoring switch according to claim 8, characterised in that the indicator elements (25) are designed as light-emitting diodes.

## Revendications

1. Interrupteur de surveillance de moteur (1) pour un moteur électrique (2) à sens de rotation inversible, comprenant un circuit d'inversion du sens de rotation (4) prévu dans les conducteurs d'amenée (3) du moteur électrique (2) et un circuit de surveillance (6) prévu dans les conducteurs d'amenée (3) du moteur électrique (2) entre le circuit d'inversion du sens de rotation (4) et le moteur électrique (2), dans lequel le circuit d'inversion du sens de rotation (4) présente plusieurs contacts de commutation d'inversion (9), dans lequel le circuit de surveillance (8) présente au moins un transformateur d'intensité (10) prévu dans le conducteur d'amenée (3) du moteur électrique (2), un circuit de surveillance (11) de la valeur effective du courant, un interrupteur de protection de surcharge (12) et un circuit d'alimentation de tension (13), et dans lequel le circuit de surveillance (11) de la valeur effective du courant est raccordé, côté entrée, à un enroulement secondaire (15) du transformateur d'intensité (10) et côté sortie, à l'interrupteur de protection de surcharge (12), et est constitué par un étage d'analyse (16) de la valeur effective et par un étage d'amorçage (17) monté en aval de l'étage d'analyse (16) de la valeur effective, par conséquent prévu côté sortie, le seuil de réponse du circuit de surveillance (11) de la valeur effective du courant étant réglable, caractérisé en ce que le circuit de surveillance (8) présente deux circuits de surveillance (11, 11′) de la valeur effective du courant, en ce que des contacts d'inversion (22) sont montés en amont côté entrée et en aval côté sortie par rapport aux circuits de surveillance (11, 11′) de la valeur effective du courant et, à l'intervention des contacts d'inversion (22), respectivement, un circuit de surveillance (11, respectivement 11′) de la valeur effective du courant est connecté et l'autre circuit de surveillance (11′, respectivement 11) de la valeur effective du courant est déconnecté, et en ce que les contacts d'inversion (22) sont commandés par les contacts de commutation d'inversion (9) respectivement de manière correspondante à l'amorçage des contacts de commutation d'inversion (9).

2. Interrupteur de surveillance de moteur selon la revendication 1, caractérisé en ce que les deux circuits de surveillance (11, 11′) de la valeur effective du courant concordent du point de vue de la technique de montage.

3. Interrupteur de surveillance de moteur selon la revendication 1 ou 2, caractérisé en ce que les deux circuits de surveillance (11, 11′) de la valeur effective du courant présentent un étage d'amorçage commun (17).

4. Interrupteur de surveillance de moteur selon la revendication 3, caractérisé en ce que les contacts d'inversion (22) côté sortie sont prévus entre les étages d'analyse (16, 16′) de la valeur effective et l'étage d'amorçage commun (17).

5. Interrupteur de surveillance de moteur pour un moteur électrique (2) à sens de rotation inversible, comprenant un circuit d'inversion du sens de rotation (4) prévu dans les conducteurs d'amenée (3) du moteur électrique (2) et un circuit de surveillance (6) prévu dans les conducteurs d'amenée (3) du moteur électrique (2) entre le circuit d'inversion du sens de rotation (4) et le moteur électrique (2), dans lequel le circuit d'inversion du sens de rotation (4) présente plusieurs contacts de commutation d'inversion (9), dans lequel le circuit de surveillance (8) présente au moins un transformateur d'intensité (10) prévu dans le conducteur d'amenée (3) du moteur électrique (2), un circuit de surveillance (11) de la valeur effective du courant, un interrupteur de protection de surcharge (12) et un circuit d'alimentation de tension (13), et dans lequel le circuit de surveillance (11) de la valeur effective du courant est raccordé, côté entrée, à un enroulement secondaire (15) du transformateur d'intensité (10) et côté sortie, à l'interrupteur de protection de surcharge (12), et est constitué par un étage d'analyse (16) de la valeur effective et par un étage d'amorçage (17) monté en aval de l'étage d'analyse (16) de la valeur effective, par conséquent prévu côté sortie, le seuil de réponse du circuit de surveillance (11) de la valeur effective du courant étant réglable, dans lequel, pour le réglage du seuil de réponse, on prévoit un élément de construction réglable (18), en particulier une résistance réglable, caractérisé en ce que le circuit de surveillance (11) de la valeur effective du courant présente deux éléments de construction réglable (18, 18′) montés parallèlement l'un à l'autre, en ce que les deux éléments de construction réglables (18, 18′) sont montés en série avec respectivement un contact d'inversion commun (22) devant et derrière et, à l'intervention des contacts d'inversion (22), respectivement un élément de construction réglable (18, respectivement 18′) est connecté et l'autre élément de construction réglable (18′, respectivement 18) est déconnecté, et en ce que les contacts d'inversion (22) sont commandés par les contacts de commutation d'inversion (9), respectivement de manière correspondante à l'amorçage des contacts de commutation d'inversion (9).

6. Interrupteur de surveillance de moteur selon l'une quelconque des revendications 1 à 5, caractérisé en ce que les contacts d'inversion (22) sont des contacts auxiliaires d'un relais de commutation disposé de manière correspondante, comprenant un enroulement d'excitation (24) commandé de manière correspondante à l'amorçage des contacts de commutation d'inversion (9), respectivement par les contacts de commutation d'inversion (9).

7. Interrupteur de surveillance de moteur selon la revendication 6, caractérisé en ce que l'enroulement d'excitation (24) du relais de commutation est monté en série avec un contact de commutation d'inversion (9), respectivement avec un contact d'inversion (20′) monté de manière correspondante aux contacts de commutation d'inversion (9), entre le pôle positif et le pôle négatif d'une source de tension, en particulier entre le pôle positif et le pôle négatif du circuit d'alimentation de tension (13).

8. Interrupteur de surveillance de moteur selon l'une quelconque des revendications 1 à 7, caractérisé en ce que le circuit de surveillance (8) présente deux éléments indicateurs (25) montés de préférence entre le pôle positif et le pôle négatif du circuit d'alimentation de tension (13) et les éléments indicateurs (25) sont montés parallèlement l'un à l'autre et en série avec un contact d'inversion commun (22).

9. Interrupteur de surveillance de moteur selon la revendication 8, caractérisé en ce que les éléments indicateurs (25) sont réalisés en forme de diodes luminescentes.
